(19) Europäisches Patentamt
European Patent Office
Office européen des brevets

(11) EP 3 675 389 B1

(12) EUROPEAN PATENT SPECIFICATION

(45) Date of publication and mention of the grant of the patent:
**19.02.2025 Bulletin 2025/08**

(21) Application number: **19807854.5**

(22) Date of filing: **18.04.2019**

(51) International Patent Classification (IPC):
***H04B 7/26*** *(2006.01)*

(52) Cooperative Patent Classification (CPC):
**H04L 27/2657; H04W 56/0015; H04W 56/002; H04W 56/0035;** H04L 27/2602

(86) International application number:
**PCT/CN2019/083181**

(87) International publication number:
**WO 2019/223462 (28.11.2019 Gazette 2019/48)**

# (54) SYNCHRONIZATION METHOD AND ACCESS POINT

SYNCHRONISATIONSVERFAHREN UND ZUGANGSPUNKT

PROCÉDÉ DE SYNCHRONISATION ET POINT D’ACCÈS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2018 CN 201810520908**

(43) Date of publication of application:
**01.07.2020 Bulletin 2020/27**

(73) Proprietor: **Huawei Technologies Co., Ltd.**
**Longgang District**
**Shenzhen, Guangdong 518129 (CN)**

(72) Inventors:
- **CHEN, Guohai**
  **Shenzhen, Guangdong 518129 (CN)**
- **YUAN, Fangchao**
  **Shenzhen, Guangdong 518129 (CN)**
- **GU, Wei**
  **Shenzhen, Guangdong 518129 (CN)**
- **CHEN, Peng**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**WO-A1-2018/082665**
**CN-A- 1 998 210**
**CN-A- 102 694 762**
**CN-A- 103 988 449**
**US-A1- 2013 089 123**
**US-A1- 2015 092 793**
**US-A1- 2017 164 387**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## TECHNICAL FIELD

This application relates to the field of communications technologies, and in particular, to a synchronization method and an access point.

## BACKGROUND

In a distributed network MIMO scenario, at a transmit end, an independent crystal oscillator source is used for each access point. Because crystal oscillators cannot be guaranteed to be the same, there are varying levels of tiny frequency offsets between the crystal oscillators. For example, for a crystal oscillator of 10 MHz, there may be an offset of 1 PPM (parts-per-million). When a radio frequency carrier frequency (5G) is generated by using a radio frequency phase locked loop (Radio Frequency Phase Locked Loop, RF PLL), there is a frequency offset of about 5 kHz between access points, resulting in phase rotation between the access points. Due to the phase rotation, there is an accumulated phase error in a signal collaboratively transmitted by a plurality of access points. Under effect of a channel, a relative phase of a signal received by a receive end is continuously rotated, and a bit error rate increases, until the receive end is unable to decode the received signal. The foregoing relative phase changes with time. A larger carrier frequency offset means a faster phase difference change and a higher bit error rate. Reasons for a relatively high bit error rate are as follows: As shown in FIG. 1a, if there are frequency offsets between a plurality of access points at the transmit end, a constellation map at the receive end cannot be mapped to a predetermined location. In addition, a mapping location keeps changing with time. As a result, the bit error rate is higher.

At the transmit end, to reduce the frequency offsets between the access points, as shown in FIG. 1b, each access point has a GPS clock module to receive an external GPS clock, so that the access points have a same crystal oscillator source, and therefore there is no frequency offset between the access points. In indoor scenarios (for example, train stations and airports), GPS signals are weak or there may be no GPS signal. Therefore, this solution can be applied only in outdoor environments.

In addition, at the transmit end, to reduce the frequency offsets between the access points, as shown in FIG. 1c, an externally configured clock board is used, and a clock signal of the clock board is led to the access points by using clock lines, as a reference clock. Therefore, reference clocks of all the access points are a same-source clock signal output by the clock board. In this way, a same crystal oscillator source is achieved for the access points, and therefore there is no frequency offset between the access points. This solution requires additional configuration of a clock board and additional deployment of clock lines, causing additional costs and time overheads. US2013089123A1 discloses a distributed coherent transmission system that enables transmissions from separate wireless transmitters with independent frequency or clock references to emulate a system where all the transmitters share a common frequency or clock reference. Differences in frequency and/or phase between transmitters are addressed by suitably precoding signals before modulation at one or more of the transmitters based on a synchronizing transmission from one of the transmitters (e.g., a master transmitter) received at a corresponding receiver sharing the frequency or clock reference with each of the one or more transmitters. Such a distributed coherent transmission system can allow N single-antenna transmitters with independent frequency or clock references to emulate a single N-antenna Multi Input Multi Output (MIMO) transmitter, or implement schemes such as distributed superposition coding or lattice codes that require coherence across separate transmitters.

WO2018082665A1 provides a frequency synchronization method. The method comprises: a slave clock receives a first pulse signal and a second pulse signal; the slave clock determines that a frequency deviation of the slave clock with respect to a master clock is equal to a first frequency deviation according to a first phase difference, a second phase difference, a first delay and a second delay, wherein the first phase difference is a difference between a phase of a third pulse signal generated by the slave clock and a phase of the first pulse signal received by the slave clock, and the second phase difference is a difference between a fourth pulse signal generated by the slave clock and a phase of the second pulse signal received by the slave clock; and the slave clock calibrates the frequency of the slave clock according to the first frequency deviation. Also disclosed is a corresponding slave clock. The foregoing solution helps improve precision of frequency synchronization.

US2015092793A1 provides a method for time offset alignment with PDV compensation where a synchronized frequency signal is available at a slave device via Synchronous Ethernet and is used to determine the compensation parameters for the PDV.

## SUMMARY

The present invention is defined by the attached independent claims. Other preferred embodiments may be found in the dependent claims. The present application discloses a synchronization method, comprising:receiving (S102), by a second access point, a monophonic signal transmitted by a first access point, wherein the monophonic signal is a signal with a single frequency;determining (S103), by the second access point, a frequency offset between a first carrier and a second carrier based on the monophonic signal, wherein the first carrier is used by the first access point to transmit the monophonic signal, and the second carrier is used by the second access point to receive the monophonic signal;performing (S104), by the second access point, phase compensation on a target data frame based on the frequency offset, so that a difference between a phase of the second carrier and a phase of the first carrier is less than or equal to a first threshold; and transmitting (S106), by the second access point, a phase-compensated target data frame by using the second carrier. The present application discloses a synchronization method, comprising:generating (S101), by a first access point, a monophonic signal, wherein the monophonic signal is a signal with a single frequency, wherein the monophonic signal is used to determine a frequency offset between a first carrier and a second carrier, the first carrier is used by the first access point to transmit the monophonic signal, and the second carrier is used by a second access point to receive the monophonic signal; and transmitting (S102), by the first access point, the monophonic signal to the second access point. The present application discloses an access point, wherein the access point is a second access point and comprises:a receiving unit (501), configured to receive a monophonic signal transmitted by a first access point, wherein the monophonic signal is a signal with a single frequency;a processing unit (502), configured to determine, based on the monophonic signal, a frequency offset between a first carrier and a second carrier, wherein the first carrier is used by the first access point to transmit the monophonic signal, the second carrier is used by the second access point to receive the monophonic signal, and the processing unit (502) is further configured to perform phase compensation on a target data frame based on the frequency offset, so that a difference between a phase of the second carrier and a phase of the first carrier is less than or equal to a first threshold; and a transmission unit (503), configured to transmit a phase-compensated target data frame by using the second carrier. The present application discloses an access point, wherein the access point is a first access point and comprises:a processing unit (601), configured to generate a monophonic signal, wherein the monophonic signal is a signal with a single frequency, wherein the monophonic signal is used to determine a frequency offset between a first carrier and a second carrier, the first carrier is used by the first access point to transmit the monophonic signal, and the second carrier is used by a second access point to receive the monophonic signal; and a transmission unit (602), configured to transmit the monophonic signal to the second access point.

## BRIEF DESCRIPTION OF DRAWINGS

FIG. 1a is a schematic diagram of a 64QAM constellation according to an embodiment of this application;
FIG. 1b is a schematic diagram of a principle for eliminating a frequency offset between carriers of each access point by using a GPS clock according to an embodiment of this application;
FIG. 1c is a schematic diagram of a principle for eliminating a frequency offset between carriers of each access point by using a clock distribution board according to an embodiment of this application;
FIG. 2a is a schematic diagram of a scenario in which access points are connected in a wired manner according to an embodiment of this application;
FIG. 2b is a schematic diagram of another scenario in which access points are connected in a wireless manner according to an embodiment of this application;
FIG. 3 is a schematic flowchart of a synchronization method according to an embodiment of this application;
FIG. 4a is a schematic diagram of interaction between a first access point and a second access point according to an embodiment of this application;
FIG. 4b is another schematic diagram of interaction between a first access point and a second access point according to an embodiment of this application;
FIG. 4c is a schematic diagram of a phase difference of a monophonic signal at a sampling moment according to an embodiment of this application;
FIG. 4d is a schematic diagram of synchronously transmitting a target data frame by a first access point and a second access point according to an embodiment of this application;
FIG. 4e is a schematic diagram of a sum of a transmission delay and a receiving delay of an access point according to an embodiment of this application;
FIG. 4f is a schematic diagram of performing phase compensation on a target data frame by a second access point in a situation according to an embodiment of this application;
FIG. 4g is a schematic diagram of performing phase compensation on a target data frame by a second access point in another situation according to an embodiment of this application;
FIG. 5 is a schematic structural diagram of an access point according to an embodiment of this application;
FIG. 6 is a schematic structural diagram of another access point according to an embodiment of this application;
FIG. 7 is a schematic structural diagram of still another access point according to an embodiment of this application; and
FIG. 8 is a schematic structural diagram of still another access point according to an embodiment of this application.

## DESCRIPTION OF EMBODIMENTS

FIG. 2a is a schematic diagram of an application scenario of performing synchronization by using a network MIMO technology according to an embodiment of this application.

As shown in FIG. 2a, this scenario may include n access points (AP) and m mobile stations. The access points may be connected in a wired manner (for example, by using an ethernet or an optical fiber). For example, an access point 1 is a primary AP, an access point 2 is a standby AP, and other (n-2) access points are secondary APs. Each of the access points has at least one antenna, and each of the mobile stations has at least one antenna. Every two of the access points may be 1 meter, 10 meters, several hundreds of meters or several kilometers away from each other, which is not limited herein.

It should be noted that the access points may alternatively be connected in a wireless manner. As shown in FIG. 2b, this scenario also includes n access points (AP) and m mobile stations, and the access points are connected in a wireless manner. For example, an access point 1 is a primary AP, an access point 2 is a standby AP, and other (n-2) access points are secondary APs. Each of the access points has at least one antenna, and each of the mobile stations has at least one antenna. Every two of the access points may be 1 meter, 10 meters, several hundreds of meters or several kilometers away from each other, which is not limited herein.

As can be seen from the scenario described in FIG. 2a or FIG. 2b, an independent crystal oscillator source is used for each access point. Because crystal oscillators cannot be guaranteed to be the same, there are varying levels of tiny frequency offsets between the crystal oscillators. And even a tiny frequency offset may cause phase rotation between the access points. Due to the phase rotation, there is an accumulated phase error in a signal collaboratively transmitted by the n access points. Under effect of a channel, a relative phase of a signal collaboratively transmitted by the access points and received by the mobile stations is continuously rotated, and a bit error rate increases, until the mobile stations are unable to decode the received signal. The foregoing relative phase changes with time. A larger frequency offset means a faster phase difference change and a higher bit error rate.

For a problem of a frequency offset between access points in any one of the foregoing scenarios, in the embodiments of this application, a synchronization method provided in an embodiment of this application is described in detail with reference to FIG. 3. FIG. 3 is an example schematic flowchart of a synchronization method. As shown in FIG. 3, the method may include at least the following steps.

S 101. A first access point generates a monophonic signal.

In this embodiment of this application, an example in which the first access point is a primary AP and a second access point is a secondary AP is used.

The monophonic signal is a signal with a single frequency, for example, the monophonic signal may be a single-frequency sinusoidal signal.

The monophonic signal may be included in a first data frame, and the first data frame may further include a target data frame. A temporal position of the monophonic signal in the first data frame may be earlier than a temporal position of the target data frame in the first data frame. The target data frame is data that a mobile station expects to receive from an access point. The first data frame may further include some fields (such as L-STF, L-LTF, L-SIG, RL-SIG, HE-SIG-A, and HE-STF). The mobile station can obtain the target data frame through parsing based on the fields. For example, the first data frame may be an 802.11 frame.

S102. The first access point transmits the monophonic signal. Correspondingly, the second access point receives the monophonic signal transmitted by the first access point.

In this embodiment of this application, before the second access point receives the monophonic signal transmitted by the first access point, the second access point may receive indication information transmitted by the first access point, where the indication information may include the following parameters for indicating the monophonic signal: an original frequency of the monophonic signal and a temporal position of the monophonic signal. The monophonic signal may be included in the first data frame, and a position of the monophonic signal in the first data frame may be indicated by a number or a character. It should be noted that the indication information may further include the following parameters: a quantity of phase jump values in the monophonic signal, duration of the monophonic signal, a time interval between the monophonic signal and the target data frame, and the like.

That the second access point receives indication information transmitted by the first access point may include the following two implementations.

In a first implementation, the second access point receives the indication information transmitted by the first access point through application layer interaction.

A specific implementation is shown in FIG. 4a. The first access point transmits the indication information encapsulated in a TCP/UDP message to the second access point. After receiving the indication information, the second access point transmits acknowledgement information indicating that the indication information has been received to the first access point.

In a second implementation, the second access point receives the indication information transmitted by the first access point through MAC layer interaction.

A specific implementation is shown in FIG. 4b. The first access point transmits the indication information encapsulated in an 802.11 action frame to the second access point. After the second access point receives the indication information, the second access point may or may not respond to the received indication information. In responding to the received indication information, the second access point may transmit an ACK frame to the first access point; or the second access point may encapsulate, in the 802.11 action frame, acknowledgement information indicating that the indication information has been received, and then the second access point transmits the 802.11 action frame encapsulated with the acknowledgement information to the first access point.

It should be noted that the indication information may alternatively be encapsulated in the first data frame including the monophonic signal, so that the first access point may transmit, to the second access point, the monophonic signal and the indication information for indicating the monophonic signal.

S103. The second access point may determine a frequency offset between a first carrier and a second carrier based on the monophonic signal, where the first carrier is used by the first access point to transmit the monophonic signal, and the second carrier is used by the second access point to receive the monophonic signal.

In this embodiment of this application, the frequency offset may equal a magnitude of phase difference change of the monophonic signal in a unit time minus the original frequency of the monophonic signal. A specific derivation process is as follows.

The following expressions express the first carrier, the second carrier, and the monophonic signal respectively, for example:

The first carrier may be expressed as:

$$C_m = A_m * (W_m * t + Q_m) \quad (1)$$

The second carrier may be expressed as:

$$C_s = A_s * (W_s * t + Q_s) \quad (2)$$

The monophonic signal may be expressed as:

$$S_a = A_a * (W_a * t + Q_a) \quad (3)$$

The first access point transmits a transmission signal $S_{a1}$ modulated with the monophonic signal to the second access point, where $S_{a1}$ may be expressed as:

$$\begin{aligned} &S_{a1} \\ &= S_a * C_m \\ &= A_a * \cos(W_a * t + Q_a) * A_m * \cos(W_m * t + Q_m) \\ &= A_a * A_m * \cos(W_m * t + Q_m) * \cos(W_a * t + Q_a) \\ &= (1/2) * A_m * A_a * [\cos(W_m * t + Q_m + W_a * t + Q_a) + \cos(W_m * t + Q_m + W_a * t - Q_a)] \quad (4) \\ &= A_{a1} * [\cos[(W_m + W_a) * t + Q_{a1}] + \cos[(W_m - W_a) * t + Q_{a2}]] \end{aligned}$$

where

$$A_{a1} = (1/2) * A_m * A_a, \quad Q_{a1} = Q_m + Q_a, \text{ and } Q_{a2} = Q_m - Q_a.$$

As shown in equation (4), the transmission signal $S_{a1}$ may include the following frequency components: ($W_m$ +$W_a$) and ($W_m$ -$W_a$).

Further, the second access point may demodulate the received transmission signal $S_{a1}$ by using the second carrier, and a demodulated signal may include the following frequency components: ($W_m$ + $W_a$ + $W_s$), ($W_m$ - $W_a$ + $W_s$), ($W_m$ + $W_a$ - $W_s$) and ($W_m$ -$W_a$ - $W_s$).

The second access point may filter out the frequency component ($W_m$ + $W_s$) by using a band-pass filter. Therefore, the demodulated signal includes only the following two frequency components: ($W_m$ + $W_a$ - $W_s$) and ($W_m$ - $W_a$ - $W_s$).

Further, after the second access point filters, by using a low-band-pass filter with a center frequency of $W_a$, the demodulated signal including only ($W_m$ + $W_a$ - $W_s$) and ($W_m$ - $W_a$ - $W_s$), there is only the frequency component ($W_m$ + $W_a$ - $W_s$) in the signal.

Then, by dividing a measured phase change of an output signal of the low-band-pass filter by a corresponding time change (the magnitude of phase difference change of the monophonic signal in the unit time), a value of the frequency component ($W_m$ + $W_a$ - $W_s$) can be obtained.

Finally, by subtracting $W_a$ from ($W_m$ + $W_a$ - $W_s$), ($W_m$ - $W_s$), that is, the frequency offset between the first carrier and the second carrier, can be obtained.

In summary, the frequency offset equals the magnitude of phase difference change of the monophonic signal in the unit time minus the original frequency of the monophonic signal.

The following describes in detail how to determine a phase difference of the monophonic signal at a sampling moment.

As shown in FIG. 4c, the second access point may perform sampling on an imaginary part and a real part of the monophonic signal separately. The second access point may obtain, based on a real part and an imaginary part of the monophonic signal at a sampling moment, an arctangent result at the sampling moment by using an arctan function. The arctangent result is a phase difference of the monophonic signal at the sampling moment.

It should be noted that, if an arctangent result at a sampling moment is less than 90 degrees and greater than -90 degrees, a phase difference of the monophonic signal at the sampling moment complies with the following rules:

If a real part of the monophonic signal at the sampling moment is less than 0, the arctangent result is increased by 180 degrees.

If the arctangent result is less than 0, the arctangent result is increased by 360 degrees.

For example, at a sampling moment 5671, the second access point may determine, based on a real part and an imaginary part of the monophonic signal at the sampling moment and by using the arctan function, that a phase difference of the monophonic signal at the moment is 296.4 degrees.

The magnitude of phase difference change of the monophonic signal in the unit time is determined by phase differences at a plurality of sampling moments within duration of the monophonic signal. Specifically, determining of the magnitude of phase difference change of the monophonic signal in the unit time in the following three situations may be included.

In a first situation, if the plurality of sampling moments within the duration of the monophonic signal are two sampling moments, the magnitude of phase difference change of the monophonic signal in the unit time is a value obtained by dividing a difference between a phase difference of the monophonic signal at a first sampling moment and a phase difference of the monophonic signal at a second sampling moment by a time interval between the two sampling moments.

In a second situation, if the plurality of sampling moments within the duration of the monophonic signal are at least three sampling moments, the magnitude of phase difference change of the monophonic signal in the unit time is a value obtained by dividing a difference between phase differences of the monophonic signal at any two sampling moments by a time interval between the two sampling moments.

In a third situation, if the plurality of sampling moments within the duration of the monophonic signal are at least three sampling moments, the magnitude of phase difference change of the monophonic signal in the unit time is an average value of magnitudes that are of phase difference change in the unit time and that are determined for the monophonic signal at any two moments.

If the plurality of sampling moments include sampling moments within duration of a plurality of monophonic signals, the frequency offset may be determined in the following two manners, where the plurality of monophonic signals may be located in a same first data frame or may be located in different first data frames.

In a first manner, the frequency offset equals an average value of magnitudes of phase difference change of the plurality of monophonic signals in the unit time minus the original frequency of the monophonic signal.

For example, the plurality of monophonic signals are two monophonic signals, where one monophonic signal is a monophonic signal 1 and the other monophonic signal is a monophonic signal 2.

First, a magnitude 1 of phase difference change of the monophonic signal 1 in the unit time and a magnitude 2 of phase difference change of the monophonic signal 2 in the unit time can be determined; and then, by averaging the magnitude 1 of phase difference change and the magnitude 2 of phase difference change, a magnitude 3 of phase difference change can be obtained. Finally, the frequency offset equals the magnitude 3 of phase difference change minus the original frequency of the monophonic signal.

In this implementation, a measurement error of the magnitude of phase difference change of the monophonic signal in the unit time can be reduced.

In a second manner, the magnitude of phase difference change of the monophonic signal in the unit time equals a magnitude of phase difference change of the monophonic signal within first duration divided by the first duration, where the first duration equals duration of two monophonic signals plus a time interval between the duration of the two monophonic signals.

For example, the plurality of monophonic signals are two monophonic signals, where one monophonic signal is a monophonic signal 3 and the other monophonic signal is a monophonic signal 4.

It is assumed that both the monophonic signal 3 and the monophonic signal 4 have duration of 4 μs and a frequency of 250 kHz, and a time interval between the monophonic signal 3 and the monophonic signal 4 is 480 μs.

It is assumed that a phase difference of the monophonic signal 3 at an initial moment is 17 degrees, a phase difference of the monophonic signal 3 at an end moment is 37 degrees, and there is a phase change of 360 degrees within the duration of the monophonic signal 3; and that a phase difference of the monophonic signal 4 at an initial moment is 277 degrees, a phase difference of the monophonic signal 4 at an end moment is 296 degrees, and there is a phase change of 360 degrees within the duration of the monophonic signal 4.

First, the second access point can determine, based on a magnitude of difference change of phases on two ends of the monophonic signal, that a quantity of 360 degrees of phase difference rotation within the time interval 480 μs is approximately 126.66 (that is, 120 + (37-17) * (480/4)/360 = 126.66) and is 126 after rounding. Therefore, the second access point can determine that the quantity of 360 degrees of phase difference rotation within the time interval 480 μs is 126.

Further, with reference to a quantity of 360 degrees of phase difference rotation within the duration of the monophonic signal 3, a quantity of 360 degrees of phase difference rotation within the duration of the monophonic signal 4, the quantity of 360 degrees of phase difference rotation within the time interval 480 μs, and a difference between the initial phase difference of the monophonic signal 3 and the end phase difference of the monophonic signal 4, phase change S of the monophonic signal in a total delay of 488 μs (that is, 4 μs + 4 μs + 480 μs = 488 μs) can be determined.

$$S = 360 + 126 * 360 + 360 + 296 - 17 = 46557 \text{ (deg)}$$

Then, the second access point can determine that the magnitude of phase difference change of the monophonic signal in the unit time is 94.994 (deg/μs) (that is, 46357 deg/488 μs).

Finally, the frequency offset S1 equals the magnitude of phase difference change of the monophonic signal in the unit time minus the original frequency of the monophonic signal.

$$S1 = 94.994 \text{ deg/}\mu\text{s-1 }\mu\text{s} * 250 \text{ kHz} * 360 \text{ deg} = 4.994 \text{ deg/}\mu\text{s}$$

Therefore, the magnitude of phase difference change of the monophonic signal in the unit time is 4.994 deg/μs.

In this implementation, a measurement error of the magnitude of phase difference change of the monophonic signal in the unit time can be reduced.

It should be noted that the plurality of sampling moments within the duration of the monophonic signal include at least: a start moment of the monophonic signal and an end moment of the monophonic signal. In this implementation, the sampling moment is a preferred sampling moment, and the measurement error of the magnitude of phase difference change of the monophonic signal in the unit time is relatively tiny.

It should be noted that if the temporal position of the monophonic signal in the first data frame is later than the temporal position of the target data frame in the first data frame, the second access point may determine the frequency offset between the first carrier and the second carrier based on a monophonic signal in a second data frame received before the first data frame is received.

S104. The second access point performs phase compensation on the target data frame based on the frequency offset, so that a difference between a phase of the second carrier and a phase of the first carrier is less than or equal to a first threshold.

In this embodiment of this application, the target data frame is an encoded target data frame. The phase of the first carrier is a phase of a first transmission signal, and the phase of the second carrier is a phase of a second transmission signal, where the first transmission signal is a signal generated by modulating the target data frame on the first carrier, and the second transmission signal is a signal generated by modulating a phase-compensated target data frame on the second carrier. The difference is a variable value that varies with time.

That is, that the difference between the phase of the second carrier and the phase of the first carrier is less than or equal to the first threshold means that a difference between a phase of the first transmission signal and a phase of the second transmission signal is less than or equal to the first threshold.

The second access point may perform phase compensation on the target data frame based on the frequency offset at the following three moments.

The second access point performs phase compensation on the target data frame based on the frequency offset at an initial moment of the target data frame; or

the second access point performs phase compensation on the target data frame based on the frequency offset before an initial moment of the target data frame; or

the second access point performs phase compensation on the target data frame based on the frequency offset after an initial moment of the target data frame.

The following is an example in which the second access point performs phase compensation on the target data frame based on the frequency offset at the initial moment of the target data frame.

The second access point may perform phase compensation on the target data frame in the following two manners.

In a first manner, if the magnitude of phase difference change of the monophonic signal in the unit time is relatively small, within duration of the target data frame, the second access point uses a same compensation value to perform phase compensation on sampling points in a single symbol of the target data frame.

For example, as shown in FIG. 4f, a secondary AP 1 determines that a phase difference of the monophonic signal at 1.05 μs is -30 degrees (that is, the phase of the second carrier is 30 degrees ahead of the phase of the first carrier). If the magnitude of phase difference change of the monophonic signal in the unit time is 0.0125 degrees/μs (the primary AP exceeds the secondary AP 1 by 0.0125 degrees every 1 μs), within duration of a transmission signal modulated with a target data frame, the second access point uses a same compensation value to perform phase compensation on sampling points in a single symbol of the target data frame.

In a second manner, if the magnitude of phase difference change of the monophonic signal in the unit time is relatively small, within duration of the target data frame, the second access point uses different compensation values to perform phase compensation on sampling points in a single symbol of the target data frame.

For example, as shown in FIG. 4g, a secondary AP 2 determines that a phase difference of the monophonic signal at 1.10 μs is 85 degrees (that is, the phase of the second carrier lags behind the phase of the first carrier by 85 degrees). If the magnitude of phase difference change of the monophonic signal in the unit time is 0.551 degrees/μs (the primary AP exceeds the secondary AP 1 by 0.551 degrees every 1 μs), the second access point uses different compensation values to perform phase compensation on sampling points in a single symbol modulated with a target data frame.

In the foregoing phase compensation implementations, different phase compensation solutions are provided for different scenarios, to reduce computational complexity and improve phase compensation accuracy.

It should be noted that, in an actual application scenario, a value of the first threshold is related to a signal-noise ratio (Signal-Noise Ratio, SNR) of a system constituted by access points. For example, when the SNR >= 30 dB, the first threshold is 1.44 degrees; or when the SNR = 10 dB, the first threshold is 3.80 degrees.

S105. The first access point transmits the target data frame to a terminal.

Specifically, as described in step 104, the target data frame is modulated on the first carrier to generate the first transmission signal. Then, the first access point transmits the target data frame by transmitting the first transmission signal.

S106. The second access point transmits the phase-compensated target data frame to the terminal by using the second carrier.

In this embodiment of this application, as described in step 104, the phase-compensated target data frame is modulated on the second carrier to generate the second transmission signal. Then, the second access point transmits the phase-compensated target data frame by transmitting the second transmission signal.

It should be noted that a moment at which the second access point transmits the phase-compensated target data frame is the same as a moment at which the first access point transmits the target data frame.

The following describes in detail how to determine a temporal position at which the first access point transmits the target data frame and a temporal position at which the second access point transmits the phase-compensated target data frame respectively. Specifically:

The moment at which the first access point transmits the target data frame is a first moment, where the first moment is a moment that is a first time interval away from a moment at which the first access point transmits a phase jump value, and the phase jump value is included in the monophonic signal.

The moment at which the second access point transmits the phase-compensated target data frame is a second moment, where the second moment is a moment that is the first time interval away from a moment at which the second access point detects a phase jump edge, and the phase jump edge is associated with the phase jump value.

There may be one or more phase jump values in the monophonic signal.

The moment of the target data frame may be an initial moment of the target data frame or a terminal moment of the target data frame; and a moment of a phase-modulated target data frame may be an initial moment of the phase-modulated target data frame or an end moment of the phase-modulated target data frame.

For example, the first moment is the initial moment of the target data frame, the second moment is an initial moment of the phase-compensated target data frame, the first access point is a primary AP, and the second access point is a secondary AP 1 or a secondary AP 2. As shown in FIG. 4d, a moment at which the primary AP transmits a phase jump value is 38 μs away from a moment at which the primary AP transmits a target data frame. The secondary AP 1 detects a phase jump edge at 1.05 μs, and the secondary AP 1 considers the phase jump edge is 38 μs away from an initial moment of a to-be-phase-compensated target data frame. Therefore, the secondary AP 1 transmits the phase-compensated target data frame at 39.05 μs. The secondary AP 2 detects a phase jump edge at 1.10 μs, and the secondary AP 2 considers the phase jump edge is 38 μs away from an initial moment of a to-be-phase-compensated target data frame. Therefore, the secondary AP 2 transmits the phase-compensated target data frame at 39.10 μs. It is assumed that a sum of a transmission delay and a receiving delay of the secondary AP 1 is 1.35 μs, and a sum of a transmission delay and a receiving delay of the secondary AP 2 is 1.20 μs. If the secondary AP 1 considers the sum of the transmission delay and the receiving delay, the AP 1 needs to transmit the phase-compensated target data frame at 37.70 μs; if the secondary AP 2 considers the sum of the transmission delay and the receiving delay, the secondary AP 2 needs to transmit the phase-compensated target data frame at 37.90 μs.

As shown in FIG. 4e, the secondary AP can determine the sum of the transmission delay and the receiving delay in a self-transmission and self-receiving manner.

For example, when the secondary AP transmits a symbol at a moment S1 and receives the symbol at a moment R1, the sum of the transmission delay and the receiving delay of the secondary AP is (S1-R1).

FIG. 4a to FIG. 4g are used to only explain the embodiments of this application and should not impose any limitation on this application.

An embodiment of this application provides an access point. FIG. 5 shows an example of an access point, and the access point 50 is the second access point in the method embodiment of FIG. 3.

As shown in FIG. 5, the access point 50 may include: a receiving unit 501, a processing unit 502, and a transmission unit 503.

The receiving unit 501 is configured to receive a monophonic signal transmitted by a first access point.

The processing unit 502 is configured to determine, based on the monophonic signal, a frequency offset between a first carrier and a second carrier, where the first carrier is used by the first access point to transmit a first data frame, and the second carrier is used by the second access point to receive the first data frame.

The processing unit 502 is further configured to perform phase compensation on a target data frame based on the frequency offset, so that a difference between a phase of the second carrier and a phase of the first carrier is less than or equal to a first threshold.

The transmission unit 503 is configured to transmit a phase-compensated target data frame by using the second carrier.

The receiving unit 501 is further configured to: before receiving the monophonic signal transmitted by the first access point, receive indication information transmitted by the first access point, where the indication information may include the following parameters for indicating the monophonic signal: an original frequency of the monophonic signal and a temporal position of the monophonic signal.

Specifically, the monophonic signal is included in the first data frame. The first data frame may further include the target data frame. A temporal position of the monophonic signal in the first data frame may be earlier than a temporal position of the target data frame in the first data frame.

A magnitude of phase difference change of the monophonic signal in a unit time is determined by phase differences at a plurality of sampling moments within duration of the monophonic signal.

The plurality of sampling moments include sampling moments within duration of a plurality of monophonic signals.

The frequency offset equals an average value of magnitudes of phase difference change of a plurality of monophonic signals in the unit time minus the original frequency of the monophonic signal.

The magnitude of phase difference change of the monophonic signal in the unit time equals a magnitude of phase difference change of the monophonic signal within first duration divided by the first duration, where the first duration equals duration of two monophonic signals plus a time interval between the duration of the two monophonic signals.

The plurality of sampling moments within the duration of the monophonic signal include at least: a start moment of the monophonic signal and an end moment of the monophonic signal.

The processing unit 502 is specifically configured to:

perform phase compensation on the target data frame based on the frequency offset at an initial moment of the target data frame; or
perform phase compensation on the target data frame based on the frequency offset before an initial moment of the target data frame; or
perform phase compensation on the target data frame based on the frequency offset after an initial moment of the target data frame.

A moment at which the transmission unit transmits the phase-compensated target data frame is the same as a moment at which the first access point transmits the target data frame;

the moment at which the first access point transmits the target data frame is a first moment, where the first moment is a moment that is a first time interval away from a moment at which the first access point transmits a phase jump value, and the phase jump value is included in the monophonic signal; and
the moment at which the transmission unit 503 transmits the phase-compensated target data frame is a second moment, where the second moment is a moment that is the first time interval away from a moment at which the second access point detects a phase jump edge, and the phase jump edge is associated with the phase jump value.

It should be understood that for specific technical features involved in the access point 50, reference may be made to descriptions in the method embodiment of FIG. 3. The access point 50 is merely an example provided in the embodiments of this application, and the access point 50 may include more or fewer components than those shown, a combination of two or more components, or components configured differently.

An embodiment of this application provides another access point. FIG. 6 shows an example of an access point, and the access point 60 is the first access point in the method embodiment of FIG. 3.

As shown in FIG. 6, the access point 60 may include: a processing unit 601 and a transmission unit 602.

The processing unit 601 is configured to generate a monophonic signal, where the monophonic signal is used to determine a frequency offset between a first carrier and a second carrier, the first carrier is used by the first access point to transmit the monophonic signal, and the second carrier is used by a second access point to receive the monophonic signal.

The transmission unit 602 is configured to transmit the monophonic signal to the second access point.

The transmission unit 602 is further configured to: before transmitting the monophonic signal to the second access point, transmit indication information to the second access point, where the indication information is used to indicate the following parameters of the monophonic signal: an original frequency of the monophonic signal and a temporal position of the monophonic signal.

Specifically, the monophonic signal is included in a first data frame. The first data frame further includes a target data frame. A temporal position of the monophonic signal in the first data frame is earlier than a temporal position of the target data frame in the first data frame.

A magnitude of phase difference change of the monophonic signal in a unit time is determined by phase differences at a plurality of sampling moments within duration of the monophonic signal.

The plurality of sampling moments include sampling moments within duration of a plurality of monophonic signals.

The frequency offset equals an average value of magnitudes of phase difference change of a plurality of monophonic signals in the unit time minus the original frequency of the monophonic signal.

The magnitude of phase difference change of the monophonic signal in the unit time equals a magnitude of phase difference change of the monophonic signal within first duration divided by the first duration, where the first duration equals duration of two monophonic signals plus a time interval between the duration of the two monophonic signals.

The plurality of sampling moments within the duration of the monophonic signal include at least: a start moment of the monophonic signal and an end moment of the monophonic signal.

A moment at which the second access point transmits a phase-compensated target data frame is the same as a moment at which the transmission unit 602 transmits the target data frame;

the moment at which the transmission unit 602 transmits the target data frame is a first moment, where the first moment is a moment that is a first time interval away from a moment at which the transmission unit 602 transmits a phase jump value, and the phase jump value is included in the monophonic signal; and

the moment at which the second access point transmits the target data frame is a second moment, where the second moment is a moment that is the first time interval away from a moment at which the second access point detects a phase jump edge, and the phase jump value is associated with the phase jump edge.

It should be understood that for specific technical features involved in the access point 60, reference may be made to descriptions in the method embodiment of FIG. 3. The access point 60 is merely an example provided in the embodiments of this application, and the access point 60 may include more or fewer components than those shown, a combination of two or more components, or components configured differently.

An embodiment of this application provides still another access point. FIG. 7 shows an example of an access point, and the access point 70 is the second access point in the method embodiment of FIG. 3.

As shown in FIG. 7, the access point 70 may include: a processor 701, a memory 702, and a transceiver 703, where the transceiver 703, the memory 702, and the processor 701 coupled to the memory 702 are connected to each other.

The memory 702 may be a permanent memory, such as a flash memory or a hard disk drive. The memory 702 is configured to store synchronization code that can be accessed and called by the processor 701.

The transceiver 703 is configured to receive a monophonic signal transmitted by a first access point.

The processor 701 is configured to access and call the synchronization code stored in the memory 702, to perform the following steps:

Step 1: Determine a frequency offset between a first carrier and a second carrier based on the monophonic signal that is transmitted by the first access point and received by the transceiver 703, where the first carrier can be used by the access point 70 to transmit a first data frame, and the second carrier can be used by the access point 70 to receive the first data frame.

Step 2: Perform phase compensation on a target data frame based on the frequency offset, so that a difference between a phase of the second carrier and a phase of the first carrier is less than or equal to a first threshold.

The transceiver 703 is further configured to transmit a phase-compensated target data frame by using the second carrier.

It should be understood that for specific technical features involved in the access point 70, reference may be made to descriptions in the method embodiment of FIG. 3. The access point 70 is merely an example provided in the embodiments of this application, and the access point 70 may include more or fewer components than those shown, a combination of two or more components, or components configured differently.

An embodiment of this application provides still another access point. FIG. 8 shows an example of an access point, and the access point 80 is the first access point in the method embodiment of FIG. 3.

As shown in FIG. 8, the access point 80 may include: a processor 801, a memory 802, and a transceiver 803, where the transceiver 803, the memory 802, and the processor 801 coupled to the memory 802 are connected to each other.

The memory 802 may be a permanent memory, such as a flash memory or a hard disk drive. The memory 802 is configured to store synchronization code that can be accessed and called by the processor 801.

The processor 801 is configured to access and call the synchronization code stored in the memory 802, to generate a monophonic signal. The monophonic signal is used to determine a frequency offset between a first carrier and a second carrier, where the first carrier is used by the first access point to transmit the monophonic signal, and the second carrier is used by a second access point to receive the monophonic signal.

The transceiver 803 is configured to transmit the monophonic signal to the second access point.

The transceiver 803 is further configured to transmit a target data frame.

It should be understood that for specific technical features involved in the access point 80, reference may be made to descriptions in the method embodiment of FIG. 3. The access point 80 is merely an example provided in the embodiments of this application, and the access point 80 may include more or fewer components than those shown, a combination of two or more components, or components configured differently.

Optionally, when the synchronization method in the embodiments is all or partially implemented by software, the access point may alternatively include only a processor. A memory configured to store a program is located outside the access point. The processor is connected to the memory by using a circuit/wire and is configured to read and execute the program stored in the memory.

The processor may be a central processing unit (Central Processing unit, CPU), a network processor (Network Processor, NP) or a combination of a CPU and an NP.

The processor may further include a hardware chip. The hardware chip may be an application-specific integrated circuit (Application-specific Integrated Circuit, ASIC), a programmable logic device (Programmable Logic Device, PLD), or a combination thereof. The PLD may be a complex programmable logic device (Complex Programmable Logic Device, CPLD), a field-programmable gate array (Field-programmable Gate Array, FPGA), generic array logic (Generic Array Logic, GAL), or a combination thereof.

The memory may include a volatile memory (volatile memory), such as a random-access memory (Random-Access Memory, RAM). The memory may alternatively include a non-volatile memory (non-volatile memory), such as a flash memory (flash memory), a hard disk drive (Hard Disk Drive, HDD) or a solid-state drive (Solid-State Drive, SSD). Alternatively, the memory may include a combination of the foregoing types of memories.

The embodiments of this application further provide a readable storage medium that stores a computer program, where the computer program is configured to perform the synchronization method provided in the foregoing embodiments.

The embodiments of this application further provide a computer program product including an instruction, where when the computer program product is run on a computer, the computer is enabled to perform the synchronization method provided in the foregoing embodiments.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

In the specification, claims, and accompanying drawings of this application, the terms "first" and "second" are intended to distinguish between similar objects but do not necessarily indicate a specific order or sequence. It should be understood that the data termed in such a way is interchangeable in proper circumstances, so that the embodiments of this application described herein can be implemented in an order other than the order illustrated or described herein. Moreover, the term "include" and any other variants are intended to cover the non-exclusive inclusion, for example, a process, method or device (an access point) that includes a list of steps or units is not necessarily limited to those steps or units that are expressly listed, but may include other steps or units not expressly listed or inherent to such a process, method, or device (an access point).

This application is described with reference to the flowcharts and/or block diagrams of the method, the device (system), and the computer program product in the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct a computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

## Claims

**1.** A synchronization method, comprising:

receiving (S102), by a second access point, a monophonic signal transmitted by a first access point, wherein the monophonic signal is a signal with a single frequency;
determining (S103), by the second access point, a frequency offset between a first carrier and a second carrier based on the monophonic signal, wherein the first carrier is used by the first access point to transmit the monophonic signal, and the second carrier is used by the second access point to receive the monophonic signal;
performing (S104), by the second access point, phase compensation on a target data frame based on the frequency offset, so that a difference between a phase of the second carrier and a phase of the first carrier is less than or equal to a first threshold; and
transmitting (S106), by the second access point, a phase-compensated target data frame by using the second carrier.

**2.** The method according to claim 1, wherein before the receiving, by a second access point, a monophonic signal transmitted by a first access point, the method further comprises:
receiving, by the second access point, indication information transmitted by the first access point, wherein the indication information is used to indicate the following parameters of the monophonic signal: an original frequency of the monophonic signal and a temporal position of the monophonic signal.

**3.** The method according to claim 1, wherein the performing, by the second access point, phase compensation on a target data frame based on the frequency offset specifically is:

performing, by the second access point, phase compensation on the target data frame based on the frequency offset at an initial moment of the target data frame; or
performing, by the second access point, phase compensation on the target data frame based on the frequency offset before an initial moment of the target data frame; or
performing, by the second access point, phase compensation on the target data frame based on the frequency offset after an initial moment of the target data frame.

**4.** The method according to claim 1, wherein

a moment at which the second access point transmits the phase-compensated target data frame is the same as a moment at which the first access point transmits the target data frame;
the moment at which the first access point transmits the target data frame is a first moment, wherein the first moment is a moment that is a first time interval away from a moment at which the first access point transmits a phase jump value, and the phase jump value is comprised in the monophonic signal; and
the moment at which the second access point transmits the phase-compensated target data frame is a second moment, wherein the second moment is a moment that is the first time interval away from a moment at which the second access point detects a phase jump edge, and the phase jump edge is associated with the phase jump value.

**5.** A synchronization method, comprising:

generating (S101), by a first access point, a monophonic signal, wherein the monophonic signal is a signal with a single frequency, wherein the monophonic signal is used to determine a frequency offset between a first carrier and a second carrier, the first carrier is used by the first access point to transmit the monophonic signal, and the second carrier is used by a second access point to receive the monophonic signal; and
transmitting (S102), by the first access point, the monophonic signal to the second access point.

**6.** The method according to claim 5, wherein before the transmitting, by the first access point, the monophonic signal to the second access point, the method further comprises:
transmitting, by the first access point, indication information to the second access point, wherein the indication information is used to indicate the following parameters of the monophonic signal: an original frequency of the monophonic signal and a temporal position of the monophonic signal.

**7.** The method according to claim 5, wherein

a moment at which the second access point transmits a phase-compensated target data frame is the same as a moment at which the first access point transmits the target data frame;
the moment at which the first access point transmits the target data frame is a first moment, wherein the first moment is a moment that is a first time interval away from a moment at which the first access point transmits a phase jump value, and the phase jump value is comprised in the monophonic signal; and
the moment at which the second access point transmits the phase-compensated target data frame is a second moment, wherein the second moment is a moment that is the first time interval away from a moment at which the second access point detects a phase jump edge, and the phase jump value is associated with the phase jump edge.

**8.** An access point, wherein the access point is a second access point and comprises:

a receiving unit (501), configured to receive a monophonic signal transmitted by a first access point, wherein the monophonic signal is a signal with a single frequency;
a processing unit (502), configured to determine, based on the monophonic signal, a frequency offset between a first carrier and a second carrier, wherein the first carrier is used by the first access point to transmit the monophonic signal, the second carrier is used by the second access point to receive the monophonic signal, and the processing unit (502) is further configured to perform phase compensation on a target data frame based on the frequency offset, so that a difference between a phase of the second carrier and a phase of the first carrier is less than or equal to a first threshold; and
a transmission unit (503), configured to transmit a phase-compensated target data frame by using the second carrier.

**9.** The access point according to claim 8, wherein
the receiving unit (501) is further configured to: before receiving the monophonic signal transmitted by the first access point, receive indication information transmitted by the first access point, wherein the indication information is used to indicate the following parameters of the monophonic signal: an original frequency of the monophonic signal and a temporal position of the monophonic signal.

**10.** The access point according to claim 8, wherein the processing unit is specifically configured to:

perform phase compensation on the target data frame based on the frequency offset at an initial moment of the target data frame; or
perform phase compensation on the target data frame based on the frequency offset before an initial moment of the target data frame; or
perform phase compensation on the target data frame based on the frequency offset after an initial moment of the target data frame.

**11.** The access point according to claim 8, wherein

a moment at which the transmission unit transmits the phase-compensated target data frame is the same as a moment at which the first access point transmits the target data frame;
the moment at which the first access point transmits the target data frame is a first moment, wherein the first moment is a moment that is a first time interval away from a moment at which the first access point transmits a phase jump value, and the phase jump value is comprised in the monophonic signal; and
the moment at which the transmission unit transmits the phase-compensated target data frame is a second moment, wherein the second moment is a moment that is the first time interval away from a moment at which the second access point detects a phase jump edge, and the phase jump edge is associated with the phase jump value.

**12.** An access point, wherein the access point is a first access point and comprises:

a processing unit (601), configured to generate a monophonic signal, wherein the monophonic signal is a signal with a single frequency, wherein the monophonic signal is used to determine a frequency offset between a first carrier and a second carrier, the first carrier is used by the first access point to transmit the monophonic signal, and the second carrier is used by a second access point to receive the monophonic signal; and
a transmission unit (602), configured to transmit the monophonic signal to the second access point.

**13.** The access point according to claim 12, wherein
the transmission unit (602) is further configured to: before transmitting the monophonic signal to the second access point, transmit indication information to the second access point, wherein the indication information is used to indicate the following parameters of the monophonic signal: an original frequency of the monophonic signal and a temporal position of the monophonic signal.

**14.** The method according to one of claims 1, 2, 5 and 6 or the access point according to one of claims 8, 9, 12 and 13, wherein
a magnitude of phase difference change of the monophonic signal in a unit time is determined by phase differences at a plurality of sampling moments within duration of the monophonic signal.

**15.** The access point according to claim 12, wherein

a moment at which the second access point transmits a phase-compensated target data frame is the same as a moment at which the transmission unit transmits the target data frame;
the moment at which the transmission unit transmits the target data frame is a first moment, wherein the first moment is a moment that is a first time interval away from a moment at which the transmission unit transmits a phase jump value, and the phase jump value is comprised in the monophonic signal; and
the moment at which the second access point transmits the target data frame is a second moment, wherein the second moment is a moment that is the first time interval away from a moment at which the second access point detects a phase jump edge, and the phase jump value is associated with the phase jump edge.

**Patentansprüche**

**1.** Synchronisationsverfahren, umfassend:

Empfangen (S102), durch einen zweiten Zugangspunkt, eines monophonen Signals, das durch einen ersten Zugangspunkt übertragen wird, wobei das monophone Signal ein Signal mit einer Einzelfrequenz ist;
Bestimmen (S103), durch den zweiten Zugangspunkt, eines Frequenzversatzes zwischen einem ersten Träger und einem zweiten Träger basierend auf dem monophonen Signal, wobei der erste Träger durch den ersten Zugangspunkt dazu verwendet wird, das monophone Signal zu übertragen, und der zweite Träger durch den zweiten Zugangspunkt dazu verwendet wird, das monophone Signal zu empfangen;
Durchführen (S104), durch den zweiten Zugangspunkt, eines Phasenausgleichs an einem Zieldatenrahmen basierend auf dem Frequenzversatz, sodass eine Differenz zwischen einer Phase des zweiten Trägers und einer Phase des ersten Trägers kleiner oder gleich einem ersten Schwellenwert ist; und
Übertragen (S106), durch den zweiten Zugangspunkt, eines phasenausgeglichenen Zieldatenrahmens unter Verwendung des zweiten Trägers.

**2.** Verfahren nach Anspruch 1, wobei das Verfahren vor dem Empfangen, durch einen zweiten Zugangspunkt, eines monophonen Signals, das durch einen ersten Zugangspunkt übertragen wird, ferner Folgendes umfasst:
Empfangen, durch den zweiten Zugangspunkt, von Angabeinformationen, die durch den ersten Zugangspunkt übertragen werden, wobei die Angabeinformationen dazu verwendet werden, die folgenden Parameter des monophonen Signals anzugeben: eine ursprüngliche Frequenz des monophonen Signals und eine zeitliche Position des monophonen Signals.

**3.** Verfahren nach Anspruch 1, wobei das Durchführen, durch den zweiten Zugangspunkt, eines Phasenausgleichs an einem Zieldatenrahmen basierend auf dem Frequenzversatz spezifisch Folgendes ist:

Durchführen, durch den zweiten Zugangspunkt, eines Phasenausgleichs an dem Zieldatenrahmen basierend auf dem Frequenzversatz zu einem anfänglichen Zeitpunkt des Zieldatenrahmens; oder
Durchführen, durch den zweiten Zugangspunkt, eines Phasenausgleichs an dem Zieldatenrahmen basierend auf dem Frequenzversatz vor einem anfänglichen Zeitpunkt des Zieldatenrahmens; oder
Durchführen, durch den zweiten Zugangspunkt, eines Phasenausgleichs an dem Zieldatenrahmen basierend auf dem Frequenzversatz nach einem anfänglichen Zeitpunkt des Zieldatenrahmens.

**4.** Verfahren nach Anspruch 1, wobei

ein Zeitpunkt, zu dem der zweite Zugangspunkt den phasenausgeglichenen Zieldatenrahmen überträgt, der gleiche wie ein Zeitpunkt ist, zu dem der erste Zugangspunkt den Zieldatenrahmen überträgt;
der Zeitpunkt, zu dem der erste Zugangspunkt den Zieldatenrahmen überträgt, ein erster Zeitpunkt ist, wobei der erste Zeitpunkt ein Zeitpunkt ist, der um ein erstes Zeitintervall von einem Zeitpunkt, zu dem der erste Zugangspunkt einen Phasensprungwert überträgt, entfernt ist und der Phasensprungwert in dem monophonen Signal umfasst ist; und
der Zeitpunkt, zu dem der zweite Zugangspunkt den phasenausgeglichenen Zieldatenrahmen überträgt, ein zweiter Zeitpunkt ist, wobei der zweite Zeitpunkt ein Zeitpunkt ist, der um das erste Zeitintervall von einem Zeitpunkt, zu dem der zweite Zugangspunkt eine Phasensprungflanke detektiert, entfernt ist und die Phasensprungflanke dem Phasensprungwert zugeordnet ist.

**5.** Synchronisationsverfahren, umfassend:

Erzeugen (S101), durch einen ersten Zugangspunkt, eines monophonen Signals, wobei das monophone Signal ein Signal mit einer Einzelfrequenz ist, wobei das monophone Signal dazu verwendet wird, einen Frequenzversatz zwischen einem ersten Träger und einem zweiten Träger zu bestimmen, der erste Träger durch den ersten Zugangspunkt dazu verwendet wird, das monophone Signal zu übertragen, und der zweite Träger durch einen zweiten Zugangspunkt dazu verwendet wird, das monophone Signal zu empfangen; und
Übertragen (S102), durch den ersten Zugangspunkt, des monophonen Signals an den zweiten Zugangspunkt.

**6.** Verfahren nach Anspruch 5, wobei das Verfahren vor dem Übertragen, durch den ersten Zugangspunkt, des monophonen Signals an den zweiten Zugangspunkt ferner Folgendes umfasst:
Übertragen, durch den ersten Zugangspunkt, von Angabeinformationen an den zweiten Zugangspunkt, wobei die Angabeinformationen dazu verwendet werden, die folgenden Parameter des monophonen Signals anzugeben: eine ursprüngliche Frequenz des monophonen Signals und eine zeitliche Position des monophonen Signals.

**7.** Verfahren nach Anspruch 5, wobei

ein Zeitpunkt, zu dem der zweite Zugangspunkt einen phasenausgeglichenen Zieldatenrahmen überträgt, der gleiche wie ein Zeitpunkt ist, zu dem der erste Zugangspunkt den Zieldatenrahmen überträgt;
der Zeitpunkt, zu dem der erste Zugangspunkt den Zieldatenrahmen überträgt, ein erster Zeitpunkt ist, wobei der erste Zeitpunkt ein Zeitpunkt ist, der um ein erstes Zeitintervall von einem Zeitpunkt, zu dem der erste Zugangspunkt einen Phasensprungwert überträgt, entfernt ist und der Phasensprungwert in dem monophonen Signal umfasst ist; und
der Zeitpunkt, zu dem der zweite Zugangspunkt den phasenausgeglichenen Zieldatenrahmen überträgt, ein zweiter Zeitpunkt ist, wobei der zweite Zeitpunkt ein Zeitpunkt ist, der um das erste Zeitintervall von einem Zeitpunkt, zu dem der zweite Zugangspunkt eine Phasensprungflanke detektiert, entfernt ist und der Phasensprungwert der Phasensprungflanke zugeordnet ist.

**8.** Zugangspunkt, wobei der Zugangspunkt ein zweiter Zugangspunkt ist und Folgendes umfasst:

eine Empfangseinheit (501), die dazu konfiguriert ist, ein monophones Signal zu empfangen, das durch einen ersten Zugangspunkt übertragen wird, wobei das monophone Signal ein Signal mit einer Einzelfrequenz ist;
eine Verarbeitungseinheit (502), die dazu konfiguriert ist, basierend auf dem monophonen Signal einen Frequenzversatz zwischen einem ersten Träger und einem zweiten Träger zu bestimmen, wobei der erste Träger durch den ersten Zugangspunkt dazu verwendet wird, das monophone Signal zu übertragen, der zweite Träger durch den zweiten Zugangspunkt dazu verwendet wird, das monophone Signal zu empfangen, und
die Verarbeitungseinheit (502) ferner dazu konfiguriert ist, einen Phasenausgleich an einem Zieldatenrahmen basierend auf dem Frequenzversatz auszuführen, sodass eine Differenz zwischen einer Phase des zweiten Trägers und einer Phase des ersten Trägers kleiner oder gleich einem ersten Schwellenwert ist; und eine Übertragungseinheit (503), die dazu konfiguriert ist, einen phasenausgeglichenen Zieldatenrahmen unter Verwendung des zweiten Trägers zu übertragen.

**9.** Zugangspunkt nach Anspruch 8, wobei
die Empfangseinheit (501) ferner zu Folgendem konfiguriert ist: vor dem Empfangen des monophonen Signals, das durch den ersten Zugangspunkt übertragen wird, Empfangen von Angabeinformationen, die durch den ersten Zugangspunkt übertragen werden, wobei die Angabeinformationen dazu verwendet werden, die folgenden Parameter des monophonen Signals anzugeben: eine ursprüngliche Frequenz des monophonen Signals und eine zeitliche Position des monophonen Signals.

**10.** Zugangspunkt nach Anspruch 8, wobei die Verarbeitungseinheit spezifisch zu Folgendem konfiguriert ist:

Durchführen eines Phasenausgleichs an dem Zieldatenrahmen basierend auf dem Frequenzversatz zu einem anfänglichen Zeitpunkt des Zieldatenrahmens; oder
Durchführen eines Phasenausgleichs an dem Zieldatenrahmen basierend auf dem Frequenzversatz vor einem anfänglichen Zeitpunkt des Zieldatenrahmens; oder
Durchführen eines Phasenausgleichs an dem Zieldatenrahmen basierend auf dem Frequenzversatz nach einem anfänglichen Zeitpunkt des Zieldatenrahmens.

**11.** Zugangspunkt nach Anspruch 8, wobei

ein Zeitpunkt, zu dem die Übertragungseinheit den phasenausgeglichenen Zieldatenrahmen überträgt, der gleiche wie ein Zeitpunkt ist, zu dem der erste Zugangspunkt den Zieldatenrahmen überträgt;
der Zeitpunkt, zu dem der erste Zugangspunkt den Zieldatenrahmen überträgt, ein erster Zeitpunkt ist, wobei der erste Zeitpunkt ein Zeitpunkt ist, der um ein erstes Zeitintervall von einem Zeitpunkt, zu dem der erste Zugangspunkt einen Phasensprungwert überträgt, entfernt ist und der Phasensprungwert in dem monophonen Signal umfasst ist; und
der Zeitpunkt, zu dem die Verarbeitungseinheit den phasenausgeglichenen Zieldatenrahmen überträgt, ein zweiter Zeitpunkt ist, wobei der zweite Zeitpunkt ein Zeitpunkt ist, der um das erste Zeitintervall von einem Zeitpunkt, zu dem der zweite Zugangspunkt eine Phasensprungflanke detektiert, entfernt ist und die Phasensprungflanke dem Phasensprungwert zugeordnet ist.

**12.** Zugangspunkt, wobei der Zugangspunkt ein erster Zugangspunkt ist und Folgendes umfasst:

eine Verarbeitungseinheit (601), die dazu konfiguriert ist, ein monophones Signal zu erzeugen, wobei das monophone Signal ein Signal mit einer Einzelfrequenz ist, wobei das monophone Signal dazu verwendet wird, einen Frequenzversatz zwischen einem ersten Träger und einem zweiten Träger zu bestimmen, der erste Träger durch den ersten Zugangspunkt dazu verwendet wird, das monophone Signal zu übertragen, und der zweite Träger durch einen zweiten Zugangspunkt dazu verwendet wird, das monophone Signal zu empfangen; und
eine Übertragungseinheit (602), die dazu konfiguriert ist, das monophone Signal an den zweiten Zugangspunkt zu übertragen.

**13.** Zugangspunkt nach Anspruch 12, wobei
die Übertragungseinheit (602) ferner zu Folgendem konfiguriert ist: vor dem Übertragen des monophonen Signals an den zweiten Zugangspunkt Übertragen von Angabeinformationen an den zweiten Zugangspunkt, wobei die Angabeinformationen dazu verwendet werden, die folgenden Parameter des monophonen Signals anzugeben: eine ursprüngliche Frequenz des monophonen Signals und eine zeitliche Position des monophonen Signals.

**14.** Verfahren nach einem der Ansprüche 1, 2, 5 und 6 oder Zugangspunkt nach einem der Ansprüche 8, 9, 12 und 13, wobei eine Größe einer Phasendifferenzänderung des monophonen Signals in einer Zeiteinheit durch Phasendifferenzen zu einer Vielzahl von Abtastzeitpunkten innerhalb einer Dauer des monophonen Signals bestimmt wird.

**15.** Zugangspunkt nach Anspruch 12, wobei

ein Zeitpunkt, zu dem der zweite Zugangspunkt einen phasenausgeglichenen Zieldatenrahmen überträgt, der gleiche wie ein Zeitpunkt ist, zu dem die Übertragungseinheit den Zieldatenrahmen überträgt;
der Zeitpunkt, zu dem die Übertragungseinheit den Zieldatenrahmen überträgt, ein erster Zeitpunkt ist, wobei der erste Zeitpunkt ein Zeitpunkt ist, der um ein erstes Zeitintervall von einem Zeitpunkt, zu dem die Übertragungseinheit einen Phasensprungwert überträgt, entfernt ist und der Phasensprungwert in dem monophonen Signal umfasst ist; und
der Zeitpunkt, zu dem der zweite Zugangspunkt den Zieldatenrahmen überträgt, ein zweiter Zeitpunkt ist, wobei der zweite Zeitpunkt ein Zeitpunkt ist, der um das erste Zeitintervall von einem Zeitpunkt, zu dem der zweite Zugangspunkt eine Phasensprungflanke detektiert, entfernt ist und der Phasensprungwert der Phasensprungflanke zugeordnet ist.

## Revendications

1. Procédé de synchronisation, comprenant :

   la réception (S102), par un second point d'accès, d'un signal monophonique émis par un premier point d'accès, dans lequel le signal monophonique est un signal à une seule fréquence ;
   la détermination (S103), par le second point d'accès, d'un décalage de fréquence entre une première porteuse et une seconde porteuse sur la base du signal monophonique, dans lequel la première porteuse est utilisée par le premier point d'accès pour émettre le signal monophonique, et la seconde porteuse est utilisée par le second point d'accès pour recevoir le signal monophonique ;
   la réalisation (S104), par le second point d'accès, d'une compensation de phase sur une trame de données cible sur la base du décalage de fréquence, de sorte qu'une différence entre une phase de la seconde porteuse et une phase de la première porteuse est inférieure ou égale à un premier seuil ; et
   la transmission (S106), par le second point d'accès, d'une trame de données cible à compensation de phase à l'aide de la seconde porteuse.

2. Procédé selon la revendication 1, dans lequel, avant la réception, par un second point d'accès, d'un signal monophonique transmis par un premier point d'accès, le procédé comprend également :
   la réception, par le second point d'accès, d'informations d'indication transmises par le premier point d'accès, dans lequel les informations d'indication sont utilisées pour indiquer les paramètres suivants du signal monophonique : une fréquence d'origine du signal monophonique et une position temporelle du signal monophonique.

3. Procédé selon la revendication 1, dans lequel la réalisation, par le second point d'accès, d'une compensation de phase sur une trame de données cible sur la base du décalage de fréquence est spécifiquement :

   la réalisation, par le second point d'accès, d'une compensation de phase sur la trame de données cible sur la base du décalage de fréquence à un moment initial de la trame de données cible ; ou
   la réalisation, par le second point d'accès, d'une compensation de phase sur la trame de données cible sur la base du décalage de fréquence avant un moment initial de la trame de données cible ; ou
   la réalisation, par le second point d'accès, d'une compensation de phase sur la trame de données cible sur la base du décalage de fréquence après un moment initial de la trame de données cible.

4. Procédé selon la revendication 1, dans lequel un moment auquel le second point d'accès transmet la trame de données cible à compensation de phase est le même qu'un moment auquel le premier point d'accès transmet la trame de données cible ;

   le moment auquel le premier point d'accès transmet la trame de données cible est un premier moment, dans lequel le premier moment est un moment qui est un premier intervalle de temps éloigné d'un moment auquel le premier point d'accès transmet une valeur de saut de phase, et la valeur de saut de phase est comprise dans le signal monophonique ; et
   le moment auquel le second point d'accès transmet la trame de données cible à compensation de phase est un second moment, dans lequel le second moment est un moment qui est le premier intervalle de temps éloigné d'un moment auquel le second point d'accès détecte un front de saut de phase, et le front de saut de phase est associé à la valeur de saut de phase.

5. Procédé de synchronisation, comprenant :

   la génération (S101), par un premier point d'accès, d'un signal monophonique, dans lequel le signal monophonique est un signal à fréquence unique, dans lequel le signal monophonique est utilisé pour déterminer un décalage de fréquence entre une première porteuse et une seconde porteuse, la première porteuse est utilisée par le premier point d'accès pour transmettre le signal monophonique, et la seconde porteuse est utilisée par un second point d'accès pour recevoir le signal monophonique ; et
   la transmission (S102), par le premier point d'accès, du signal monophonique au second point d'accès.

6. Procédé selon la revendication 5, dans lequel, avant la transmission, par le premier point d'accès, du signal monophonique au second point d'accès, le procédé comprend également :
   l'émission, par le premier point d'accès, d'informations d'indication transmises par le second point d'accès, dans lequel les informations d'indication sont utilisées pour indiquer les paramètres suivants du signal monophonique : une fréquence d'origine du signal monophonique et une position temporelle du signal monophonique.

7. Procédé selon la revendication 5, dans lequel un moment auquel le second point d'accès transmet une trame de données cible à compensation de phase est le même qu'un moment auquel le premier point d'accès transmet la trame de données cible ;

   le moment auquel le premier point d'accès transmet la trame de données cible est un premier moment, dans lequel le premier moment est un moment qui est un premier intervalle de temps éloigné d'un moment auquel le premier point d'accès transmet une valeur de saut de phase, et la valeur de saut de phase est comprise dans le signal monophonique ; et
   le moment auquel le second point d'accès transmet la trame de données cible à compensation de phase est un second moment, dans lequel le second moment est un moment qui est le premier intervalle de temps éloigné d'un moment auquel le second point d'accès détecte un front de saut de phase, et la valeur de saut de phase est associé au front de saut de phase.

8. Point d'accès, dans lequel le point d'accès est un second point d'accès et comprend :

   une unité de réception (501), configurée pour recevoir un signal monophonique émis par un premier point d'accès, dans lequel le signal monophonique est un signal à une seule fréquence ;
   une unité de traitement (502), configurée pour déterminer, sur la base du signal monophonique, un décalage de fréquence entre une première porteuse et une seconde porteuse, dans lequel la première porteuse est utilisée par le premier point d'accès pour transmettre le signal monophonique, la seconde porteuse est utilisée par le second point d'accès pour recevoir le signal monophonique, et
   l'unité de traitement (502) est également configurée pour réaliser une compensation de phase sur une trame de données cible sur la base du décalage de fréquence, de sorte qu'une différence entre une phase de la seconde porteuse et une phase de la première porteuse est inférieure ou égale à un premier seuil ; et
   une unité de transmission (503), configurée pour transmettre une trame de données cible à compensation de phase à l'aide de la seconde porteuse.

9. Point d'accès selon la revendication 8, dans lequel l'unité de réception (501) est également configurée pour :
avant la réception du signal monophonique transmis par le premier point d'accès, recevoir des informations d'indication transmises par le premier point d'accès, dans lequel les informations d'indication sont utilisées pour indiquer les paramètres suivants du signal monophonique : une fréquence originale du signal monophonique et une position temporelle du signal monophonique.

10. Point d'accès selon la revendication 8, dans lequel l'unité de traitement est spécifiquement configurée pour :

   réaliser une compensation de phase sur la trame de données cible sur la base du décalage de fréquence à un moment initial de la trame de données cible ; ou
   réaliser une compensation de phase sur la trame de données cible sur la base du décalage de fréquence avant un moment initial de la trame de données cible ; ou
   réaliser une compensation de phase sur la trame de données cible sur la base du décalage de fréquence après un moment initial de la trame de données cible.

11. Point d'accès selon la revendication 8, dans lequel un moment auquel l'unité de transmission transmet la trame de données cible à compensation de phase est le même qu'un moment auquel le premier point d'accès transmet la trame de données cible ;

   le moment auquel le premier point d'accès transmet la trame de données cible est un premier moment, dans lequel le premier moment est un moment qui est un premier intervalle de temps éloigné d'un moment auquel le premier point d'accès transmet une valeur de saut de phase, et la valeur de saut de phase est comprise dans le signal monophonique ; et
   le moment auquel l'unité de transmission transmet la trame de données cible à compensation de phase est un second moment, dans lequel le second moment est un moment qui est le premier intervalle de temps éloigné d'un moment auquel le second point d'accès détecte un front de saut de phase, et le front de saut de phase est associé à la valeur de saut de phase.

12. Point d'accès, dans lequel le point d'accès est un premier point d'accès et comprend :

l'unité de traitement (601), configurée pour générer un signal monophonique, dans lequel le signal monophonique est un signal à fréquence unique, dans lequel le signal monophonique est utilisé pour déterminer un décalage de fréquence entre une première porteuse et une seconde porteuse, la première porteuse est utilisée par le premier point d'accès pour transmettre le signal monophonique, et la seconde porteuse est utilisée par un second point d'accès pour recevoir le signal monophonique ; et
une unité de transmission (602), configurée pour transmettre le signal monophonique au second point d'accès.

**13.** Point d'accès selon la revendication 12, dans lequel l'unité de transmission (602) est également configurée pour : avant la transmission du signal monophonique au second point d'accès, transmettre des informations d'indication au second point d'accès, dans lequel les informations d'indication sont utilisées pour indiquer les paramètres suivants du signal monophonique : une fréquence originale du signal monophonique et une position temporelle du signal monophonique.

**14.** Procédé selon l'une des revendications 1, 2, 5 et 6, ou point d'accès selon l'une des revendications 8, 9, 12 et 13, dans lequel
une amplitude de changement de différence de phase du signal monophonique dans un temps unitaire est déterminée par des différences de phase à une pluralité de moments d'échantillonnage dans la durée du signal monophonique.

**15.** Point d'accès selon la revendication 12, dans lequel un moment auquel le second point d'accès transmet la trame de données cible à compensation de phase est le même qu'un moment auquel l'unité de transmission transmet la trame de données cible ;

le moment auquel l'unité de transmission transmet la trame de données cible est un premier moment, dans lequel le premier moment est un moment qui est un premier intervalle de temps éloigné d'un moment auquel l'unité de transmission transmet une valeur de saut de phase, et la valeur de saut de phase est comprise dans le signal monophonique ; et
le moment auquel le second point d'accès transmet la trame de données cible est un second moment, dans lequel le second moment est un moment qui est le premier intervalle de temps éloigné d'un moment auquel le second point d'accès détecte un front de saut de phase, et la valeur de saut de phase est associé au front de saut de phase.

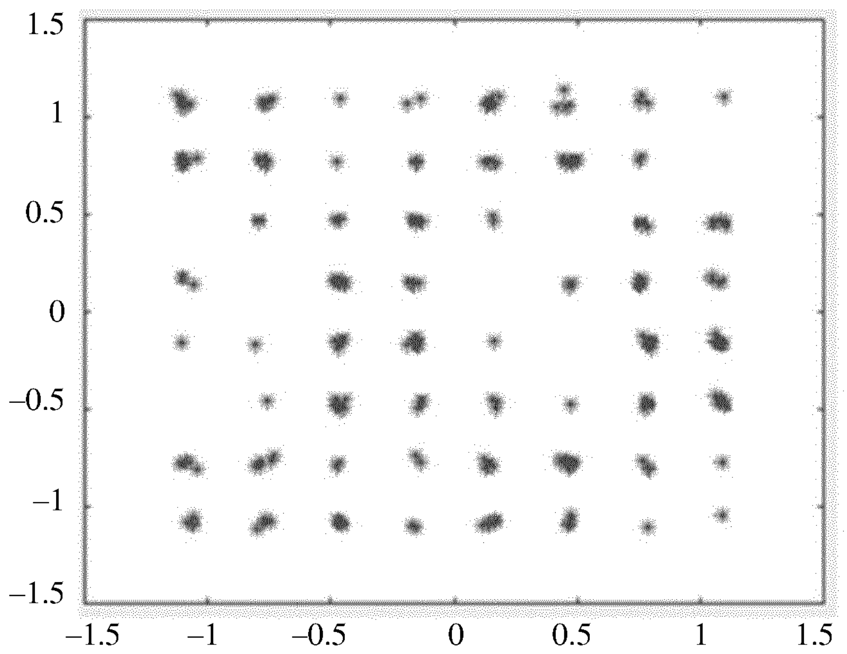
1.5
1
0.5
0
–0.5
–1
–1.5
–1.5
–1
–0.5
0
0.5
1
1.5

FIG. 1a

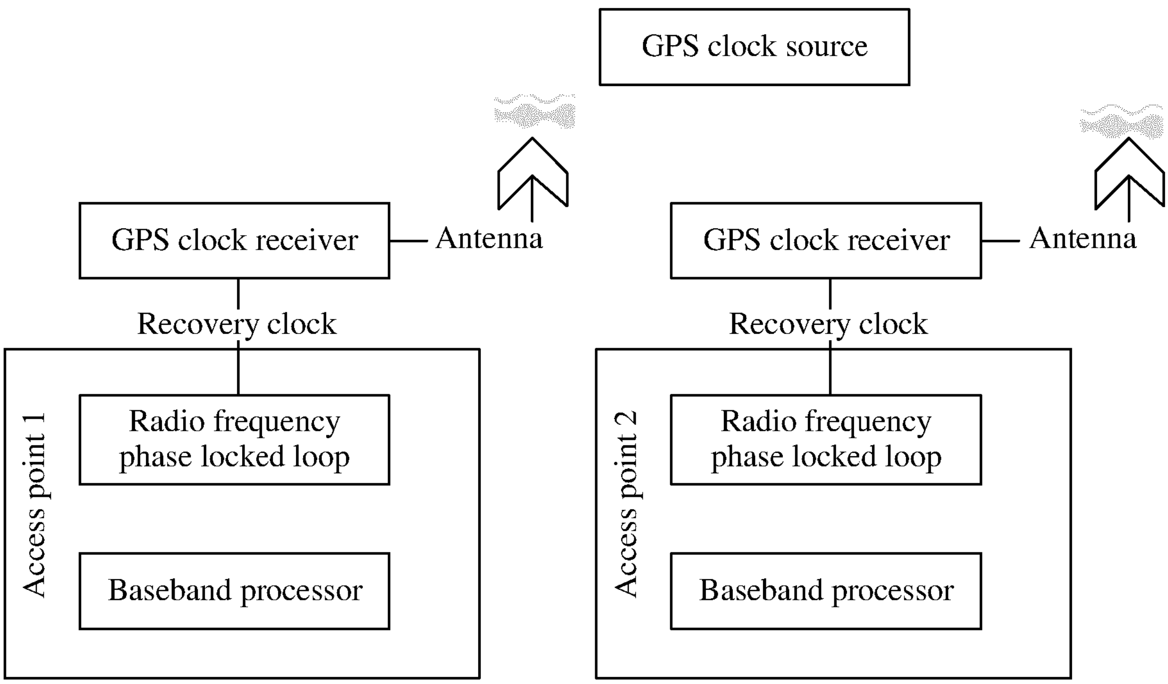
GPS clock source
GPS clock receiver
Antenna
Recovery clock
Access point 1
Radio frequency phase locked loop
Baseband processor
GPS clock receiver
Antenna
Recovery clock
Access point 2
Radio frequency phase locked loop
Baseband processor

FIG. 1b

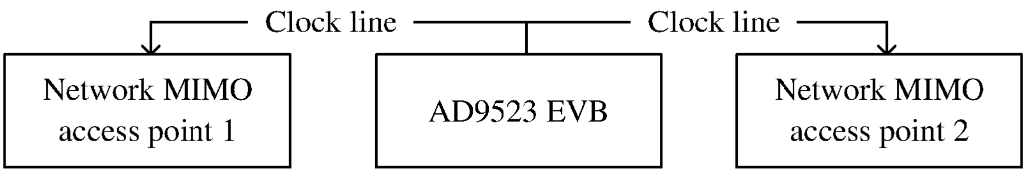
Clock line
Clock line
Network MIMO access point 1
AD9523 EVB
Network MIMO access point 2

FIG. 1c

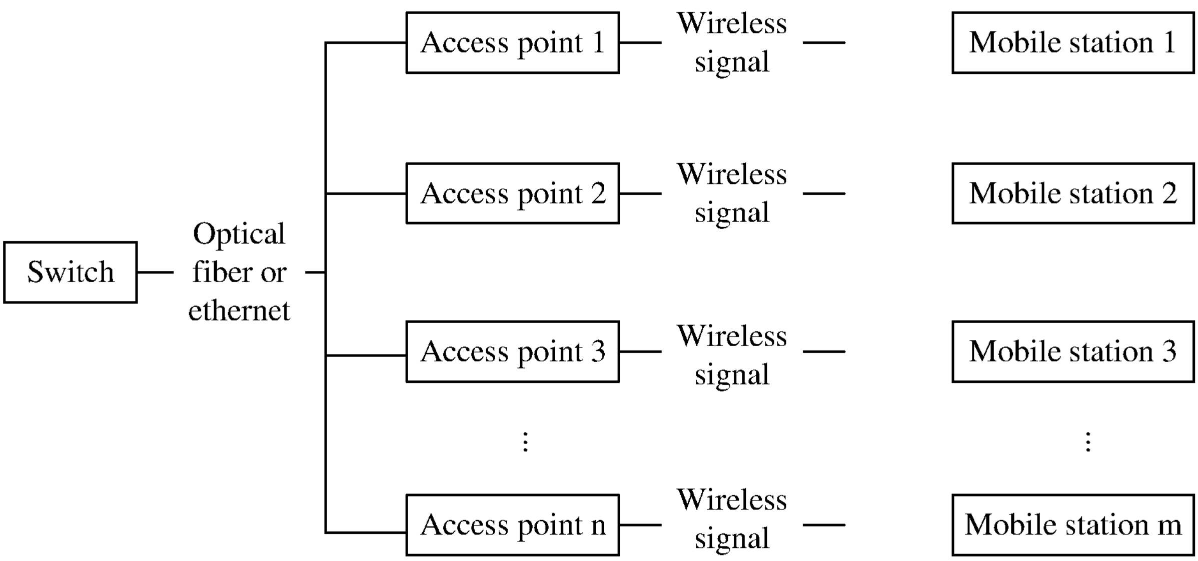
Switch
Optical fiber or ethernet
Access point 1
Access point 2
Access point 3
Access point n
Wireless signal
Wireless signal
Wireless signal
Wireless signal
Mobile station 1
Mobile station 2
Mobile station 3
Mobile station m

FIG. 2a

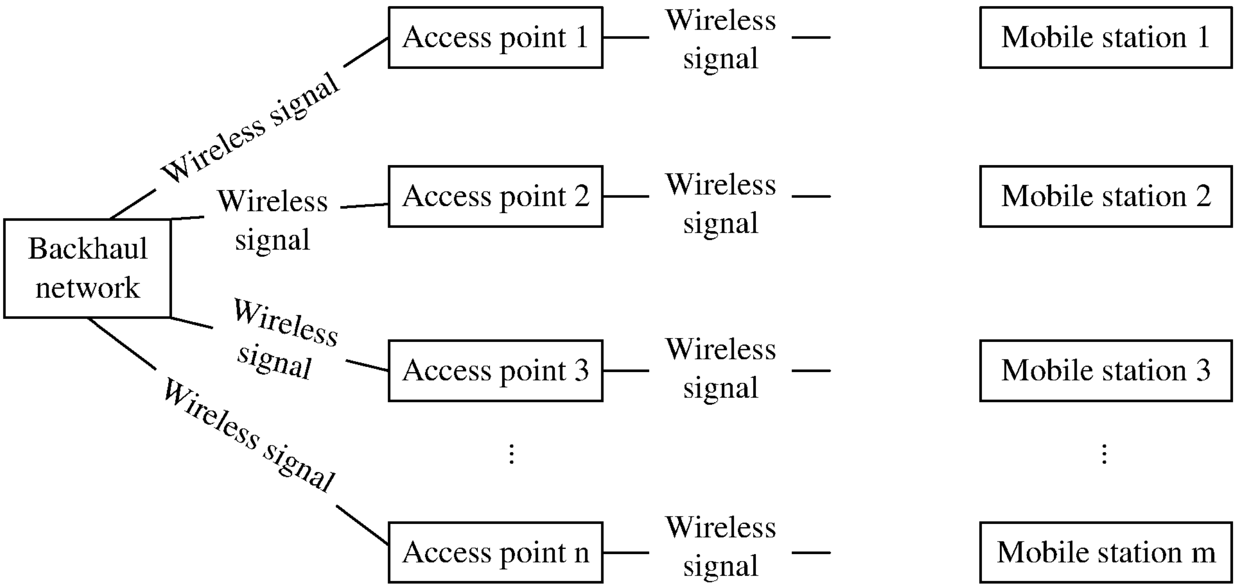
Backhaul network
Wireless signal
Wireless signal
Wireless signal
Wireless signal
Access point 1
Access point 2
Access point 3
Access point n
Wireless signal
Wireless signal
Wireless signal
Wireless signal
Mobile station 1
Mobile station 2
Mobile station 3
Mobile station m

FIG. 2b

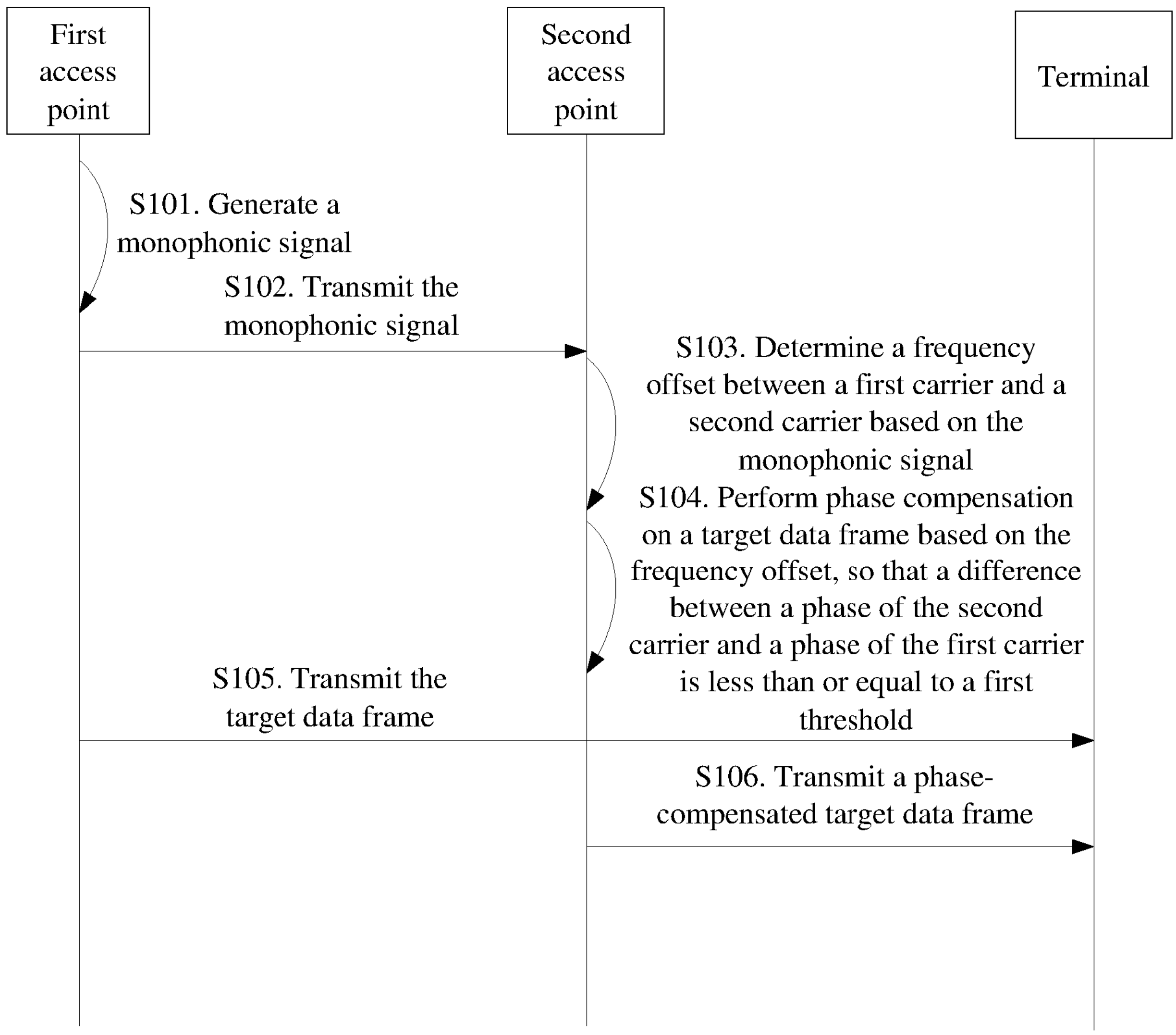
First access point
Second access point
Terminal
S101. Generate a monophonic signal
S102. Transmit the monophonic signal
S103. Determine a frequency offset between a first carrier and a second carrier based on the monophonic signal
S104. Perform phase compensation on a target data frame based on the frequency offset, so that a difference between a phase of the second carrier and a phase of the first carrier is less than or equal to a first threshold
S105. Transmit the target data frame
S106. Transmit a phase-compensated target data frame

FIG. 3

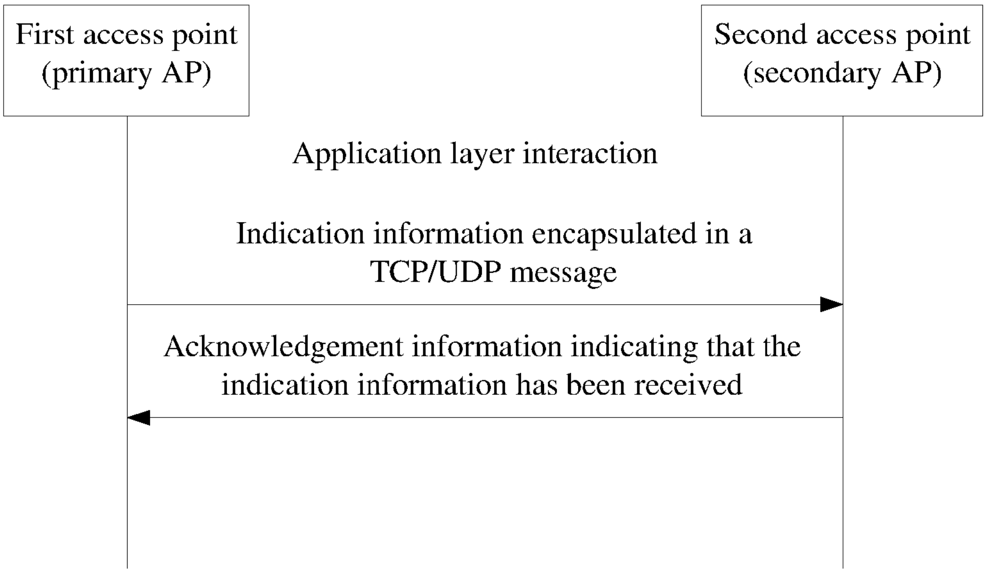
First access point
(primary AP)
Second access point
(secondary AP)
Application layer interaction
Indication information encapsulated in a TCP/UDP message
Acknowledgement information indicating that the indication information has been received

FIG. 4a

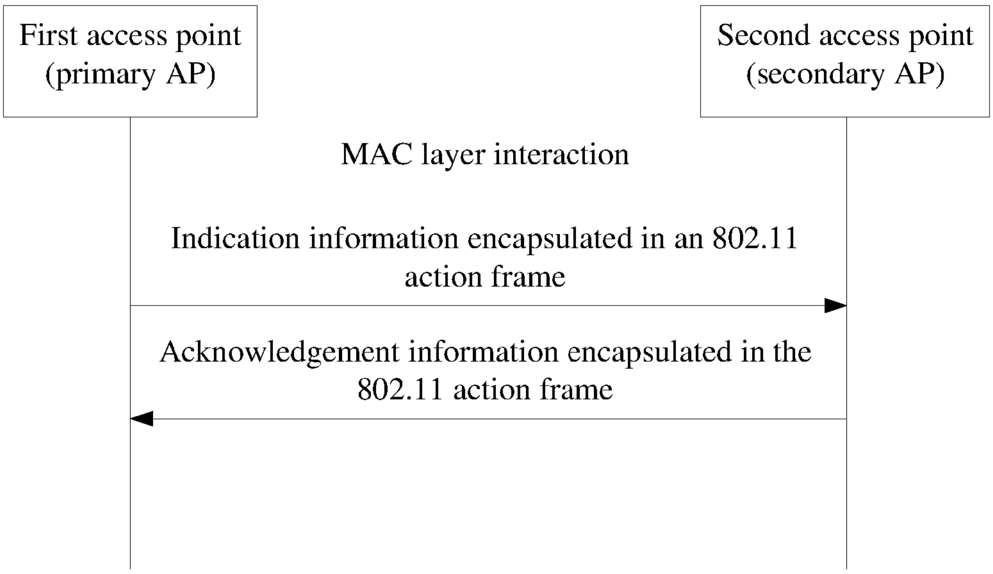
First access point
(primary AP)
Second access point
(secondary AP)
MAC layer interaction
Indication information encapsulated in an 802.11 action frame
Acknowledgement information encapsulated in the 802.11 action frame

FIG. 4b

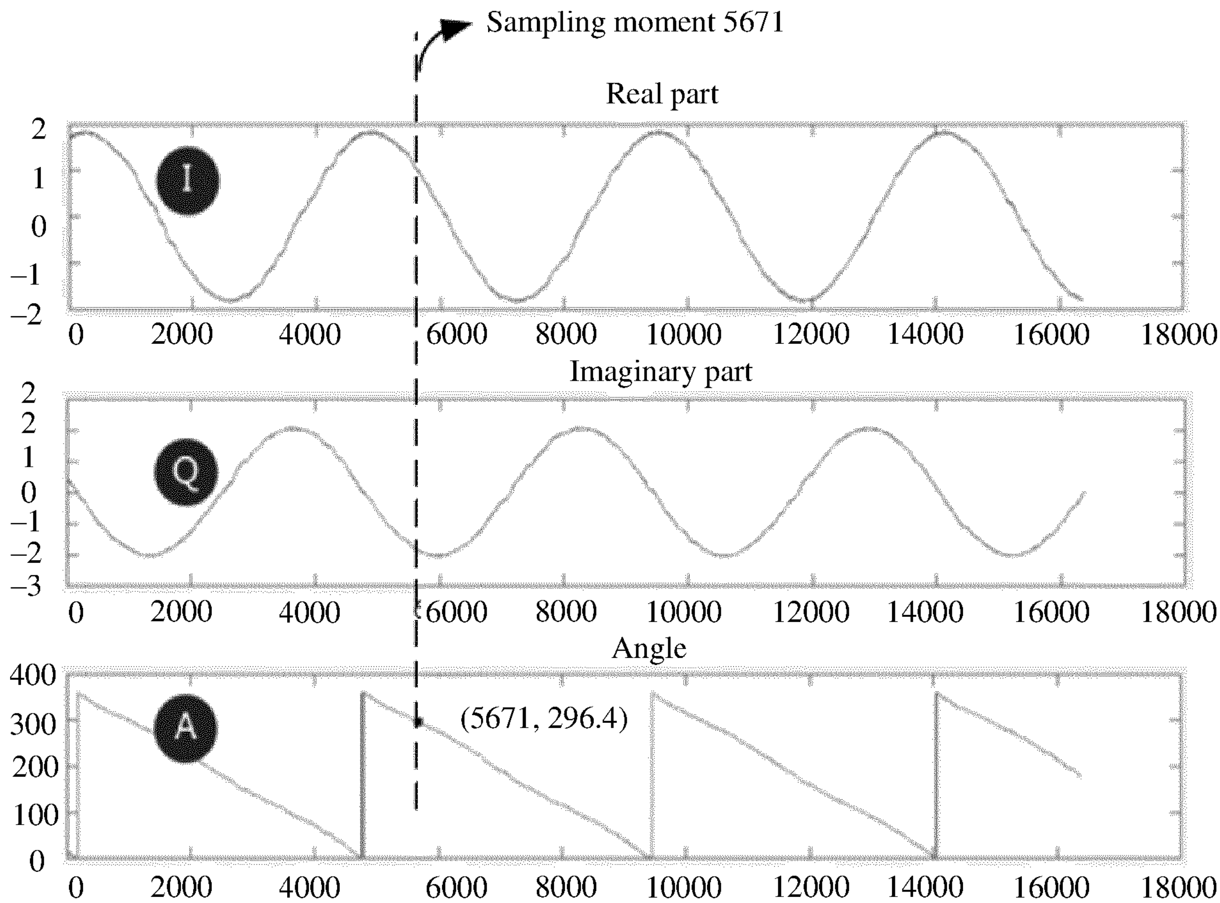
Sampling moment 5671
Real part
I
2
1
0
–1
–2
0
2000
4000
6000
8000
10000
12000
14000
16000
18000
Imaginary part
Q
2
2
1
0
–1
–2
–3
0
2000
4000
6000
8000
10000
12000
14000
16000
18000
Angle
A
400
300
200
100
0
(5671, 296.4)
0
2000
4000
6000
8000
10000
12000
14000
16000
18000

FIG. 4c

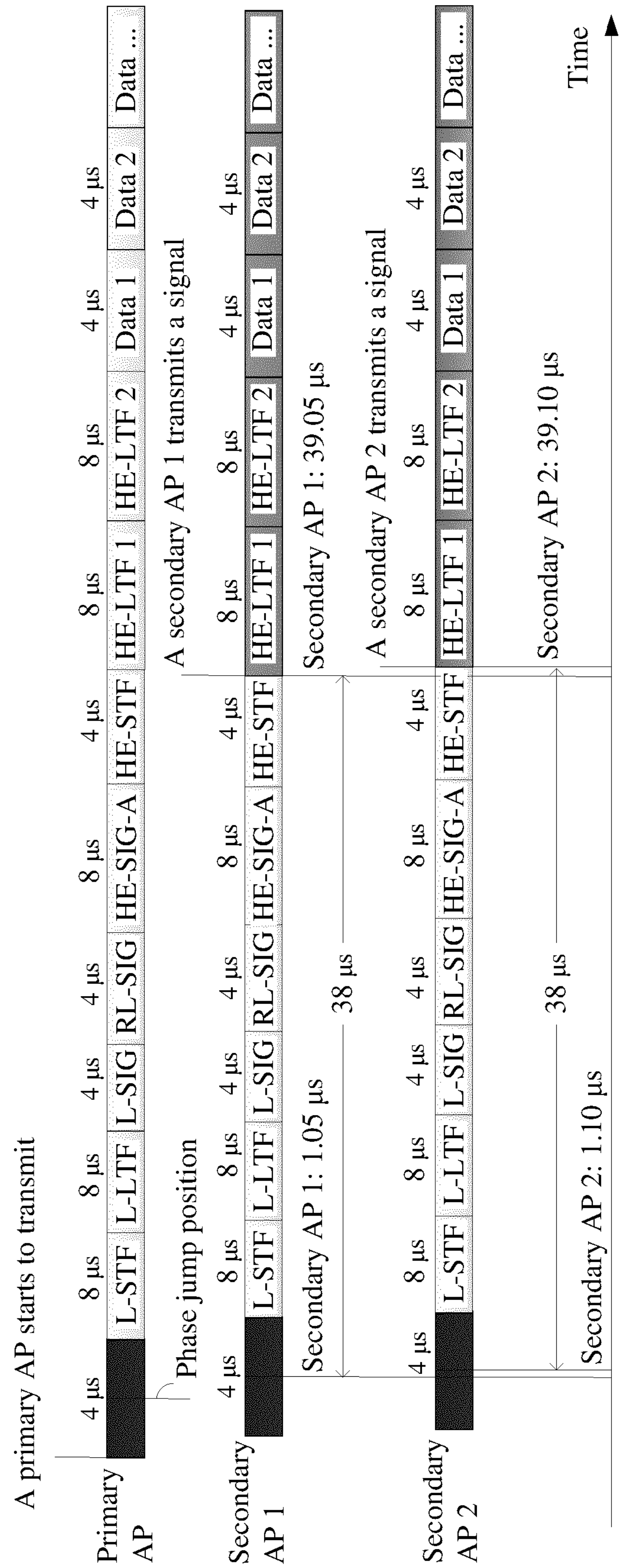
A primary AP starts to transmit
Primary AP
4 µs
8 µs
L-STF
8 µs
L-LTF
4 µs
L-SIG
4 µs
RL-SIG
8 µs
HE-SIG-A
4 µs
HE-STF
8 µs
HE-LTF 1
8 µs
HE-LTF 2
4 µs
Data 1
4 µs
Data 2
Data ...
Phase jump position
A secondary AP 1 transmits a signal
Secondary AP 1
Secondary AP 1: 1.05 µs
38 µs
Secondary AP 1: 39.05 µs
A secondary AP 2 transmits a signal
Secondary AP 2
Secondary AP 2: 1.10 µs
38 µs
Secondary AP 2: 39.10 µs
Time

FIG. 4d

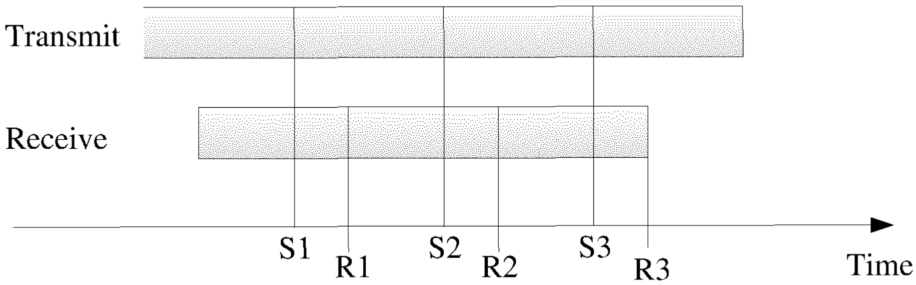


FIG. 4e

| Transmission signal | Initial phase compensation value | Offset time | Phase difference caused by a frequency offset | Phase compensation value |
|---|---|---|---|---|
| HE-LTF1 | –30 | 38 | 0.475 | –29.525 |
| HE-LTF2 | –30 | 46 | 0.575 | –29.425 |
| Data1 | –30 | 54 | 0.675 | –29.325 |
| Data2 | –30 | 58 | 0.725 | –29.275 |
| ⋮ | ⋮ | ⋮ | ⋮ | ⋮ |

FIG. 4f

| Transmission signal | Initial phase compensation value | Offset time | Phase difference caused by a frequency offset | First sampling point of a phase compensation value | Phase compensation value offset 1 μs | Phase compensation value offset 2 μs | Phase compensation value offset 3 μs | Phase compensation value offset 4 μs | Phase compensation value offset 5 μs |
|---|---|---|---|---|---|---|---|---|---|
| HE-LTF 1 | 85 | 38 | 20.938 | 64.062 | 63.511 | 62.96 | 38 | 0.475 | −29.525 |
| HE-LTF 2 | 85 | 46 | 25.346 | 59.654 | 59.103 | 58.552 | 46 | 0.575 | −29.425 |
| Data 1 | 85 | 54 | 29.754 | 55.246 | 54.695 | 55.144 | 54 | 0.675 | −29.325 |
| Data 2 | 85 | 58 | 31.958 | 53.042 | 52.491 | 51.94 | 58 | 0.725 | −29.275 |
| ⋮ | ⋮ | ⋮ | ⋮ | ⋮ | ⋮ | ⋮ | ⋮ | ⋮ | ⋮ |

FIG. 4g

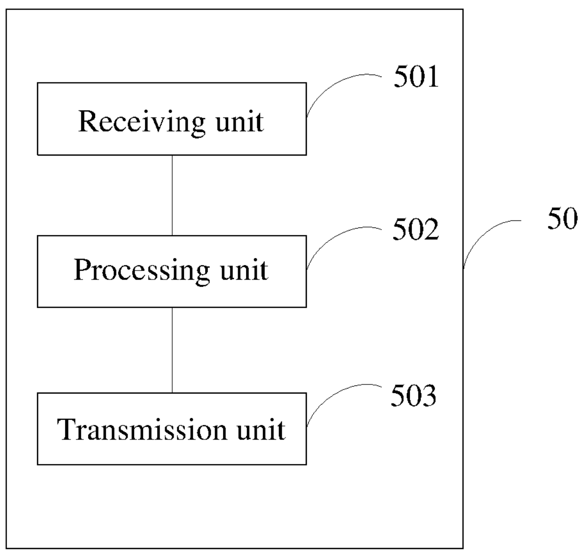
Receiving unit
501
Processing unit
502
50
Transmission unit
503

FIG. 5

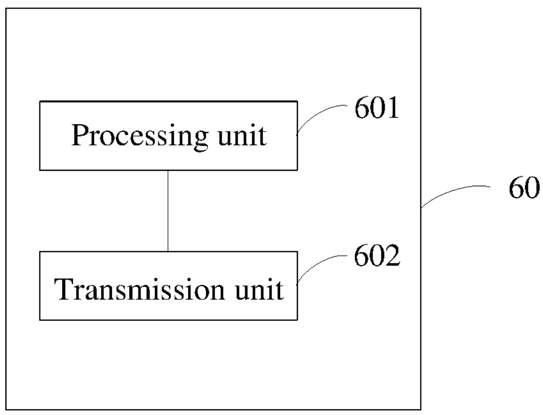
Processing unit
601
60
Transmission unit
602

FIG. 6

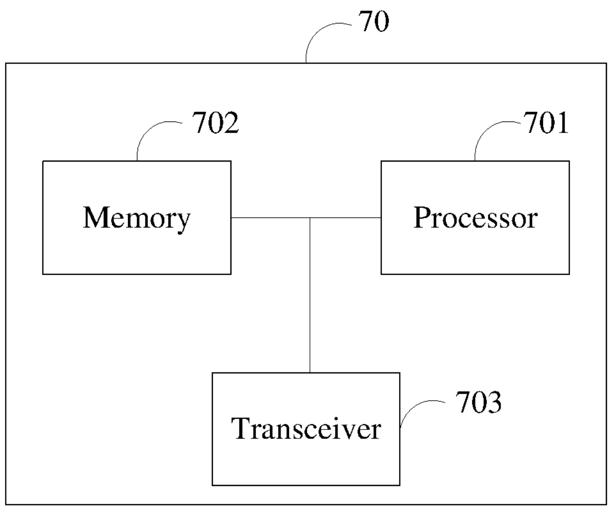
70
702
701
Memory
Processor
Transceiver
703

FIG. 7

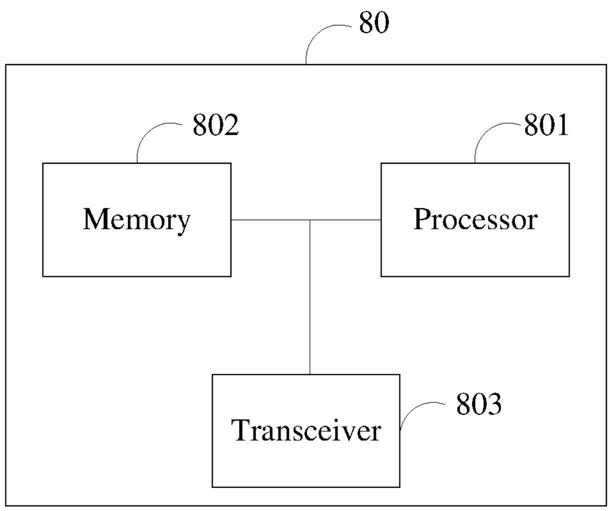
80
802
801
Memory
Processor
Transceiver
803

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2013089123 A1
- WO 2018082665 A1
- US 2015092793 A1